Europäisches Patentamt

European Patent Office

Office européen des brevets

(11) Veröffentlichungsnummer: **0 199 189**
**B1**

(12) **EUROPÄISCHE PATENTSCHRIFT**

(45) Veröffentlichungstag der Patentschrift:
26.10.88

(51) Int. Cl.⁴: **B 60 G 3/06,** B 60 G 13/00

(21) Anmeldenummer: **86104858.5**

(22) Anmeldetag: **09.04.86**

(54) **Unabhängige Radaufhängung für Kraftfahrzeuge.**

(30) Priorität: **24.04.85 DE 3514823**

(43) Veröffentlichungstag der Anmeldung:
**29.10.86 Patentblatt 86/44**

(45) Bekanntmachung des Hinweises auf die Patenterteilung:
**26.10.88 Patentblatt 88/43**

(84) Benannte Vertragsstaaten:
**DE FR GB IT SE**

(56) Entgegenhaltungen:
**DE - A - 1 580 480**
**DE - A - 2 924 368**
**DE - A - 3 331 282**
**FR - A - 1 237 255**
**FR - A - 2 202 790**
**FR - A - 2 333 658**
**FR - A - 2 365 453**
**US - A - 2 846 234**

(73) Patentinhaber: **BAYERISCHE MOTOREN WERKE
Aktiengesellschaft, Postfach 40 02 40 Petuelring 130 -
AJ-36, D-8000 München 40 (DE)**

(72) Erfinder: **Sautter, Wolfgang, Riesheimer Strasse 24,
D-8032 Gräfelfing (DE)**

## Beschreibung

Die Erfindung bezieht sich auf eine unabhängige Radaufhängung für Kraftfahrzeuge, insbesondere für gelenkte Fahrzeugräder von Personenkraftwagen nach dem Oberbegriff des Hauptanspruchs.

Die DE-A 222 49 971 zeigt eine gattungsgemässe Radaufhängung, bei der das Traggelenk als Drehgelenk ausgelegt ist. Die Schwenkachse verläuft im wesentlichen in Fahrzeuglängsrichtung und weist einen Abstand zu der Wirkungslinie einer im Radaufstandspunkt angreifenden Hochkraft auf. Die Hochkraft bewirkt ein Moment, das in dem Dämpferbein Querkräfte hervorruft. Die Folge ist eine erhöhte Reibung zwischen den gleitenden Teilen des Dämpferbeines, die die Losbrechkräfte erhöht und den Federungskomfort beeinträchtigt.

Aufgabe der Erfindung ist es, eine gattungsgemässe Radaufhängung so weiterzubilden, dass das Dämpferbein weitgehend von derartigen Querkräften freigehalten wird.

Die Aufgabe wird erfindungsgemäss mit den kennzeichnenden Merkmalen des Hauptanspruchs gelöst. Vorteilhafte Ausführungen ergeben sich aus den Unteransprüchen.

Durch die Erfindung ergibt sich ein ideeller Gelenkpunkt der gelenkigen Verbindung zwischen Dämpferbein und Tragarm auf der Wirkungslinie der im Radaufstandspunkt angreifenden Hochkraft.

Das Fahrzeugrad versucht beim Auftreten einer solchen Kraft um eine Achse zu kippen, die sich zwischen dem tragarmseitigen Universalgelenk und dem Traggelenk ausbildet. Da diese Achse erfindungsgemäss die Wirkungslinie der Hochkraft schneidet, wird ein unerwünschter Moment im Dämpferbein verhindert.

Andererseits ruft die Hochkraft eine ihr entgegengerichtete Kraft in der Schraubenfeder hervor. Da die Wirkungslinie dieser Kraft wiederum auf die Verbindungslinie zwischen dem aufbauseitigen Traggelenk und dem Schnittpunkt der erwähnten Schwenkachse mit der Wirkungslinie der Hochkraft gerichtet ist, erzeugt dieses Kräftepaar ebenfalls kein das Dämpferbein belastendes Moment, so dass dieses insgesamt belastungsfrei bleibt.

Um die gleiche Wirkung zu erzielen, müsste bei herkömmlicher Bauart das Traggelenk bis in die Radmitte hinein verschoben sein. Erst bei dieser Lage könnte die Hochkraft kein Moment in dem Dämpferbein erzeugen. Für eine solche Anordnung des Traggelenks ist jedoch in aller Regel kein Platz vorhanden, da der Raum von Bremsenteilen usw. beansprucht wird.

In der Praxis wird es nicht immer möglich sein, die Schwenkachse genau mit der Wirkungslinie der Hochkraft schneiden zu lassen. Der Schnittpunkt wird ggf. in der näheren Umgebung liegen. In diesem Fall entsteht selbstverständlich wieder ein das Dämpferbein belastendes Moment. Bleibt das Moment genügend klein, kann es vernachlässigt werden angesichts des mit der Erfindung erreichten Vorteils, das Traggelenk an einem von keinen anderen Fahrwerksteilen beanspruchten Platz vorzusehen.

Schneidet die Schwenkachse die Wirkungslinie der Hochkraft in Annäherung an die Fahrbahn, kann der Tragarm Längs- und Querkräfte in besonders vorteilhafter Weise aufnehmen. Ein solcher Verlauf der Schwenkachse lässt sich durch den Erfindungsgedanken in einfacher Weise dadurch erreichen, dass das tragarmseitige Gelenk des Zwischenlenkers in Fahrtrichtung gesehen höher angeordnet wird als das Traggelenk.

Die erfindungsgemässe Radaufhängung eignet sich in besonderer Weise für gelenkte Fahrzeugräder, ohne dass dabei ihre Anwendung für nicht gelenkte Räder ausgeschlossen wäre. Im Fall der Anwendung bei einem gelenkten Rad weist der Zwischenlenker dämpferbeinseitig ebenfalls ein Universalgelenk auf, durch dessen Gelenkmittelpunkt die Lenkachse des Fahrzeugrades verlaufen muss.

Ein vorteilhaftes Ausführungsbeispiel der Erfindung wird in der nachfolgenden Beschreibung anhand der dazugehörigen Zeichnung näher erläutert. Es zeigen

Fig. 1 eine erfindungsgemässe Radaufhängung in schematischer Darstellung und in Fahrtrichtung gesehen und

Fig. 2 die Draufsicht dieser Radaufhängung.

Die in der Zeichnung dargestellte unabhängige Radaufhängung soll für ein gelenktes Fahrzeugrad eines Personenkraftwagens vorgesehen sein. Dabei sind in den Figuren grösstenteils die Teile weggelassen, die für das Verständnis der Erfindung nicht notwendig sind.

Ein Fahrzeugrad 1 lagert auf einem Radträger 2. Der Radträger 2 ist über ein Dämpferbein 3 und einen Tragarm 4 am nicht dargestellten Fahrzeugaufbau oder daran befestigten Bauteilen, wie Fahrschemel usw. angelenkt. Das Dämpferbein 3 ist im wesentlichen vertikal ausgerichtet und fest mit dem Radträger 2 verbunden. Mit dem anderen Ende stützt sich das Dämpferbein 3 in einem Gelenklager 5 am Fahrzeugaufbau ab.

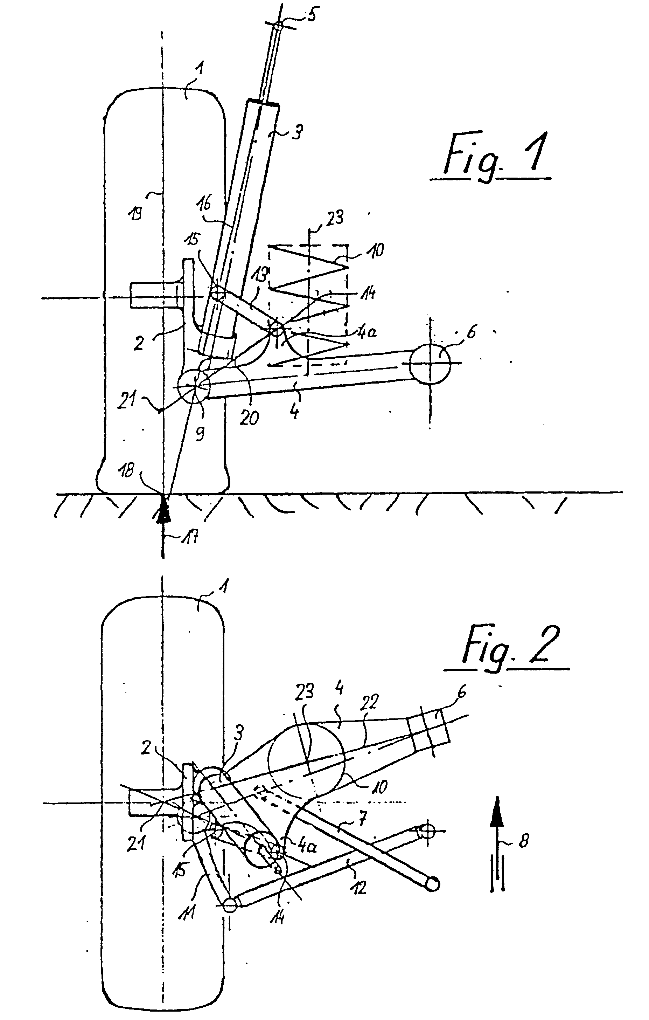

Nach Fig. 2 erstreckt sich der Tragarm 4 im wesentlichen quer zur Fahrzeuglängsachse und ist über ein Universalgelenk 6 am Fahrzeugaufbau befestigt. Eine Stützstrebe 7, die in einem spitzen Winkel zum Tragarm 4 verläuft, verbindet zusätzlich diesen mit dem Fahrzeugaufbau. Auch die Stützstrebe 7 weist an ihren beiden Enden Gelenke auf, auf die aber in diesem Zusammenhang nicht näher eingegangen zu werden braucht. In Fahrtrichtung gesehen, die in Fig. 2 durch den Pfeil 8 symbolisiert ist, erstreckt sich der Tragarm 4 einwärts nach vorne und die Stützstrebe 7 einwärts nach hinten.

Ein Traggelenk 9 verbindet den Tragarm 4 mit dem Radträger 2 bzw. dem daran befestigten Dämpferbein 3. Ausserdem sitzt auf dem Tragarm 4 eine Schraubenfeder 10, die mit ihrem oberen Ende den Fahrzeugaufbau abstützt. Der Vollständigkeit halber lässt die Fig. 2 noch einen am Radträger 2 befestigten Lenkhebel 11 und eine daran

angeschlossene zu einem nicht gezeichneten Lenkgetriebe führende Spurstange 12 erkennen.

Ein Zwischenlenker 13 verbindet einen höckerartigen Fortsatz 4a des Tragarms 4 mit dem unteren Abschnitt des Dämpferbeins 3. Dabei weist der Zwischenlenker 13 an beiden Enden je ein Universalgelenk 14 und 15 auf. Wie Fig. 1 zeigt, befindet sich der Fortsatz 4a und damit das Universalgelenk 14 in einer höheren Lage als das Traggelenk 9. Das Universalgelenk 15 des Zwischenlenkers 13 liegt auf der Verbindungslinie zwischen dem Gelenklager 5 und dem Traggelenk 9. Diese Verbindungslinie, mit 16 bezeichnet, bildet die Lenkachse des Fahrzeugrades 1.

In Fig. 1 greift eine Hochkraft 17 am Radaufstandspunkt 18 an. Diese Hochkraft 17 ist durch das Gewicht des Fahrzeugs gegeben und kann sich während der Fahrt sich durch Unebenheiten der Fahrbahn erhöhen oder verringern. Die Wirkungslinie der Hochkraft 17 ist mit 19 bezeichnet. Sie verläuft senkrecht nach oben und fällt in dem dargestellten Ausführungsbeispiel mit der Radmittenebene zusammen.

Eine Verbindungslinie 20 zwischen dem Traggelenk 9 und dem tragarmseitigen Universalgelenk 14 des Zwischenlenkers 13 bildet die Schwenkachse, um das das Fahrzeugrad 1 beim Auftreten der Hochkraft 17 zu kippen versucht. Diese Verbindungslinie 20 bzw. Schwenkachse schneidet die Wirkungslinie 19 der Hochkraft 17 in einem Punkt 21. Durch diesen Schnittpunkt 21 verläuft auch die Verlängerung einer Verbindungslinie 22 (Fig. 2), die sich zwischen dem Gelenkmittelpunkt des aufbauseitigen Universalgelenks 6 des Tragarms und der Kraftwirkungslinie 23 der Schraubenfeder 10 erstreckt.

Der Vollständigkeit halber sei noch erwähnt, dass bei einer Einfederungsbewegung des Fahrzeugrades 1 der Tragarm 4 um sein aufbauseitiges Gelenk 6 schwenkt und dabei bedingt durch den Zwischenlenker 13 um seine Längsachse dreht.

## Patentansprüche

1. Unabhängige Radaufhängung für Kraftfahrzeuge, insbesondere für gelenkte Fahrzeugräder von Personenkraftwagen, mit einem Dämpferbein, das über ein Traggelenk mit einem im wesentlichen quer zur Fahrzeuglängsachse verlaufenden und am Fahrzeugaufbau angelenkten Tragarm verbunden ist, wobei der Tragarm eine den Fahrzeugaufbau abstützende Schraubenfeder aufnimmt, gekennzeichnet durch folgende Merkmale:
– Der Tragarm (4) weist dämpferbein- und aufbauseitig jeweils ein Universalgelenk (9; 6) auf;
– ein Zwischenlenker (13) verbindet zusätzlich das Dämpferbein (3) mit dem Tragarm (4) und ist wenigstens am Tragarm (4) mit einem Universalgelenk (14) angeschlossen:
– die Verbindungslinie (20) zwischen dem tragarmseitigen Universalgelenk (14) des Zwischenlenkers (13) und dem Traggelenk (9) schneidet in ihrer Verlängerung die Wirkungslinie (19) einer im Radaufstandspunkt (18) angreifenden Hochkraft (19) (Schnittpunkt 21);
– die Verbindungslinie (22) zwischen dem Schnittpunkt (21) und dem Gelenkmittelpunkt des aufbauseitigen Tragarmgelenks (6) schneidet sich mit der Kraftwirkungslinie (23) der Schraubenfeder (10).

2. Radaufhängung nach Anspruch 1, dadurch gekennzeichnet, dass der Zwischenlenker (13) dämpferbeinseitig ein Universalgelenk (15) aufweist, dessen Gelenkmittelpunkt auf der Verbindungslinie (16) zwischen dem Gelenklager (5) des Dämpferbeins (3) und Traggelenk (9) liegt.

3. Radaufhängung nach Anspruch 1 oder 2, dadurch gekennzeichnet, dass das tragarmseitige Universalgelenk (14) des Zwischenlenkers (13) gegenüber dem Traggelenk (9) eine in Fahrtrichtung gesehen höhere Lage einnimmt.

## Claims

1. An independent wheel suspension for motor vehicles, especially for steered vehicle wheels of passenger cars, having a damper strut connected via a support joint with a support arm which runs substantially transversely to the longitudinal axis of the vehicle and is articulated to the vehicle body, wherein the support arm receives a helical spring supporting the vehicle body, characterised by the following features:
– the support arm (4) has a universal joint (9; 6) on the damper strut side and on the body side respectively;
– an intermediate steering member (13) additionally connects the damper strut (3) to the support arm (4) and is connected, at least to the support arm (4), by a universal joint (14);
– an extension of the connecting line (20) between the universal joint (14) of the intermediate steering member (13) on the support arm side and the support joint (9) intersects the line of action (19) of an upward force (19) acting at the ground-contact point (18) of the wheel (point of intersection 21);
– the connecting line (22) between the point of intersection (21) and the central point of the support arm joint (6) on the body side intersects the line of action of the force (23) of the helical spring (10).

2. A wheel suspension according to claim 1, characterised in that the intermediate steering member (13) has a universal joint (15) on the damper strut side, the central point of which joint lies on the connecting line (16) between the joint bearing (5) of the damper strut (3) and the support joint (9).

3. A wheel suspension according to claim 1 or 2, characterised in that the universal joint (14) of the intermediate steering member (13) assumes a higher position on the support arm side with respect to the support joint (9) when viewed in the direction of travel.

**Revendications**

1. Suspension indépendante d'essieu de véhicules, en particulier pour roues directrices de voitures particulières, avec une jambe de force d'amortisseur, qui est reliée par une articulation support avec un bras support se développant principalement transversalement à l'axe longitudinal du véhicule et articulé au châssis de véhicule, le bras support supportant à cette occasion un ressort hélicoïdal prenant appui sur le châssis de véhicule, caractérisée par les caractéristiques suivantes:
– le bras support (4) possède une articulation universelle (9; 6), pour chacun des côtés, jambe de force d'amortisseur et châssis;
– un bras intermédiaire (13) relie supplémentairement la jambe de force d'amortisseur (3) au bras support (4) et est au moins raccordé au bras support (4), avec une articulation universelle (14);
– la ligne de liaison (20) située entre l'articulation universelle (14) du bras intermédiaire (13), qui est situé côté bras support, et l'articulation support (9) coupe en son prolongement la ligne d'action (19) d'une force dirigée vers le haut (19), agissant au point de contact de l'essieu (18) (Point de coupure 21);
– la ligne de liaison (22) située entre le point de coupure (21) et le point médian d'articulation de l'articulation de bras support (6) située côté châssis, se coupe avec la ligne d'action de force (23) du ressort hélicoïdal (10).

2. Suspension d'essieu selon la revendication 1, caractérisée en ce que le bras intermédiaire (13) qui est situé du côté de la jambe de force d'amortisseur possède une articulation universelle (15) dont le point médian d'articulation se situe sur la ligne de liaison (16) entre le palier articulé (5) de la jambe de force d'amortisseur (3) et l'articulation support (9).

3. Suspension d'essieu selon la revendication 1 ou 2, caractérisée en ce que l'articulation universelle (14) du bras intermédiaire (13), qui est situé côté bras support prend par rapport à l'articulation support (9) une position plus élevée, vue dans la direction du roulement.

*Fig. 1*

*Fig. 2*